# EUROPÄISCHE PATENTSCHRIFT

(11) **EP 0 470 075 B1**
(45) Veröffentlichungstag und Bekanntmachung des Hinweises auf die Patenterteilung: **18.11.1993**
(21) Anmeldenummer: 90900063.0
(22) Anmeldetag: 23.12.1989
(51) Int. Cl.: B23C 5/02

(54) **FRÄSWERKZEUG**
MILLING CUTTER
OUTIL DE FRAISAGE

(30) Priorität: 28.04.1989 DE 3914074
(43) Veröffentlichungstag der Anmeldung: 12.02.1992
(73) Patentinhaber: ROBERT BOSCH GMBH, 70442 Stuttgart (DE)
(72) Erfinder: SCHWEIKERT, Karl, D-7580 Bühl (DE); WEISSER, Helmut, New Bern, NC 28562 (US)
(86) Internationale Anmeldenummer: DE8900790
(87) Internationale Veröffentlichungsnummer: WO9013386

(56) Entgegenhaltungen:
- DE-A- 3 623 559
- US-A- 4 541 757

## Beschreibung

Die Erfindung betrifft ein der Gattung des Anspruchs 1 entsprechendes Fräswerkzeug.

Durch die US-PS 4 541,757 ist bereits ein zweiteiliges Schlagmühlen- Mahl-Werkzeug bekannt. Dieses besteht aus einem zylindrischen Schaft, der stirnseitig in einer Bohrung eines flügelartigen Schneidenträgers sitzend, in der Art einer Welle-Nabe-Verbindung durchdringt. Aufgrund dieser Losung ist es möglich, höherwertiges Schneidenmaterial mit kostengünstigem, geringerwertigem Trägermaterial zu kombinieren.

Wie dieses Mahlwerkzeug haben auch Fräswerkzeuge entweder stirnseitige oder radiale Schneiden. Insoweit sind Mahlwerkzeuge und Fräser miteinander vergleichbar. Aus diesem Grund ist die o.g. Druckschrift als Stand der Technik zur vorliegenden Erfindung angegeben.

Nachteil der bekannten Lösung ist der hohe Herstellungsaufwand für die Verbindung zwischen Schaft und Schneidenträger sowie die formbedingte Schwächung entweder des Schaftes oder des Schneidenträgers im Bereich der Welle-Nabe-Verbindung. Dieser Nachteil ist auch durch beste Verbindungstechnologien zwischen dem Schneidenträger und dem Schaft nur bedingt auszugleichen. Die Folgen sind ungünstiges Schwingungsverhalten, dadurch bedingter hoher Verschleiß an den Werkseugschneiden, rasche Ermüdung und Bruch des Schaftes sowie geringwertige Schneid- bzw. Arbeitsqualität.

### Vorteile der Erfindung

Ein Fräswerkzeug mit den kennzeichnenden Merkmalen des Anspruchs 1 hat die Vorteile, daß es besonders einfach und kostengünstig herstellbar ist und eine hohe Lebensdauer mit sehr hoher erreichbarer Arbeitsqualität sowie besonderer Benutzerfreundlichkeit vereint.

Als Schaft sind fertige Normstifte, als Schneidenträger sind bereits vorhandene Halbzeugblechplatten oder einfach herstellbare Blechteile verwendbar. Die Form des Schaftes und damit auch dessen Festigkeit sind durch den daran befestigten Schneidenträger nicht beeinflußt. Der Schaft behält somit seine höchstmögliche formbedingte Festigkeit.

Die Montage bzw. das Zusammenfügen der bedarfsweise bereits gehärteten Einzelteile zu einem fertigen Werkzeug ist auf einfache Weise durchführbar. Die geringe Masse des Fräswerkzeugs erlaubt besonders hohe Drehzahlen. Die Form der Schneidenträger macht eine benutzerfreundliche Handhabung mit verringerter Verletzungsgefahr vor allem beim Spannen des Fräswerkzeuges möglich. Unwuchten nach dem Schärfen sind aufgrund der Form bzw. der Massverteilung des Schneidenträgers praktisch vernachlässigbar.

### Zeichnung

Die Erfindung ist durch Ausführungsbeispiele erläutert und in einer zugehörigen Zeichnung dargestellt. Es zeigen die Figur 1 ein Fräswerkzeug mit nur einem Schneidenträger, Figur 2 dessen Seitenansicht, Figur 3 ein Fräswerkzeug mit mit nur einem Schneidenträger mit mehrfach gewölbten Bereichen, die Figuren 4 und 5 verschiedene Ansichten eines Fräswerkzeuges mit innerhalb nur eines Schneidenträgers abschließendem Schaft, Figur 6 zeigt ein Fräswerkzeug mit nur einem Schneidenträger, der gesonderte Schneidplatten trägt, Figur 7 ein Fräswerkzeug mit zwei Schneidenträgern und mit gekrümmten Sicherheitsflügeln, Figur 8 dessen Querschnitt, Figur 9 die Explosivdarstellung eines Fräswerkzeuges mit Schneidenträger mit Schneidplatten und Figur 10 ein Fräswerkzeug mit geraden Sicherheitsflügeln.

### Beschreibung des Ausführungsbeispiels

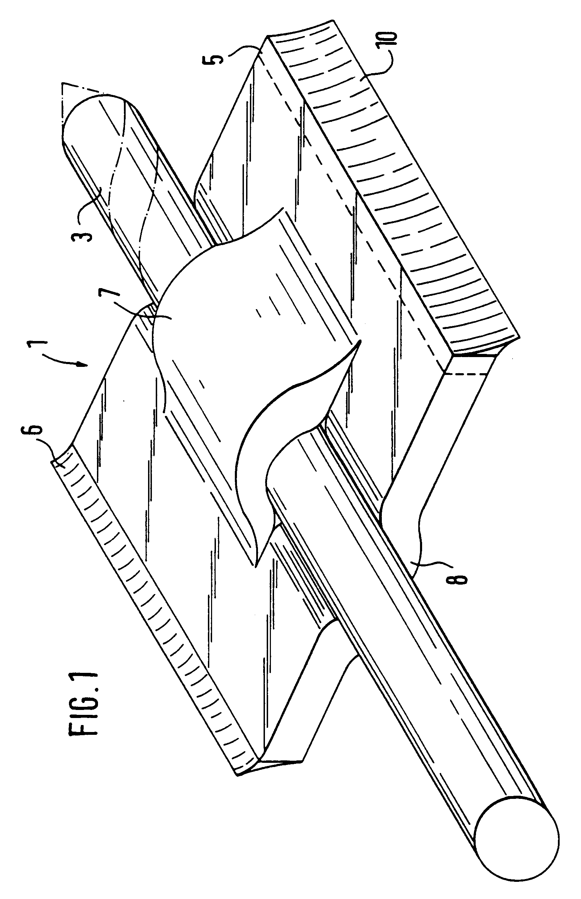

In Figur 1 ist ein Fräswerkzeug 1 gezeigt, das aus einem zylindrischen Schaft 3 und einem ebenen Schneidenträger 5 besteht. Der Schneidenträger 5 ist mit einem gewölbten Bereich 7 versehen, der in Form eines Rohrsegmentes aus der Ebene des Schneidenträgers 5 tritt, und in dem der Schaft 3 geführt und gehalten ist. Der übrige Bereich des Schneidenträgers 5 auf dem der Schaft 3 aufliegt, weist in diesem Ausfuhrungsbeispiel einen dem ersten entgegengerichteten, konkaven gewölbten Bereich 8 auf, der der besseren Auflage des Schaftes 3 und der gleichmäßigeren Kraftverteilung zwischen dem Schaft 3 und dem Schneidenträger 5 dient.

An seinen am weitesten von der Achse des Schaftes 3 entfernten Kanten ist der Schneidenträger 5 mit Schneiden 6, 10 versehen. Mögliche weitere zusätzliche, frontale Schneiden können auf der Stirnseite des Schneidenträgers 5 angeordnet sein und sind nicht mit dargestellt. Der Schaft 3 kann auf einer Seite als Bohrer ausgebildet sein, dieser fungiert dann als Zentrumsbohrer für das Fräswerkzeug 1. Zwischen dem Schaft 3 und dem Schneidenttäger 5 kann über die gewölbten Bereiche 7, 8 eine Quetschverbindung hergestellt sein. Die Quetschverbindung kann aber auch allein am Schaft 3 auf jeder Seite der gewölbten Bereiche 7, 8 so vorgenommen sein, daß eine formschlüssige Verbindung zwischen dem Schaft 3 und dem Schneidenträger 5 hergestellt ist. Andere Verbindungsmöglichkeiten können Kleben, Löten, Schweißen, insbesondere Laserschweißen sein.

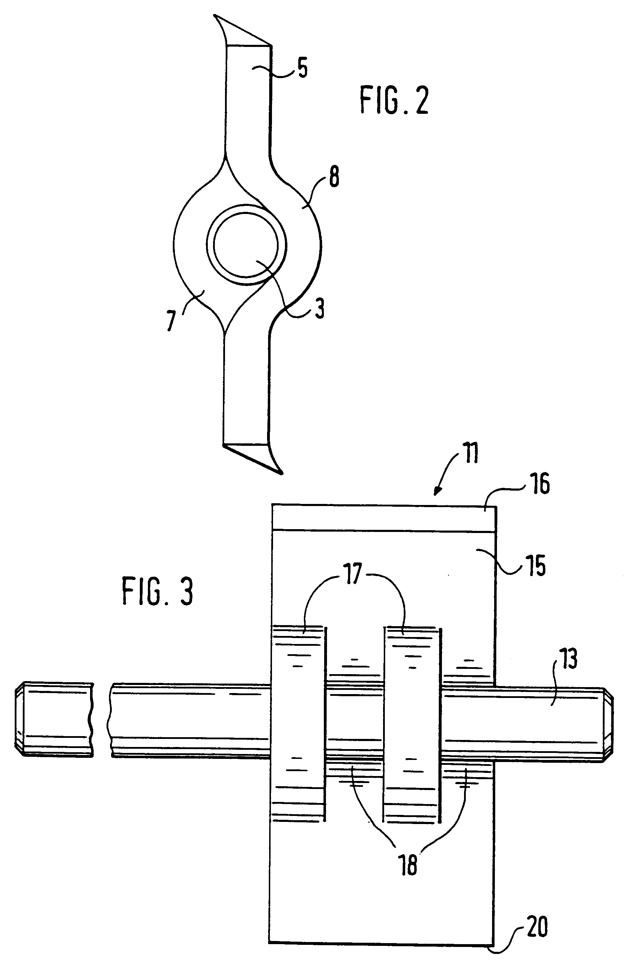

In Figur 2 sind besonders deutlich die gewölbten Bereiche 7, 8 gezeigt, die den Schaft 3 radial umschlingen.

In Figur 3 ist ein Fräswerkzeug 11 gezeigt, dessen Schaft 13 am Schneidenträger 15 durch zusätzliche gewölbte Bereiche 17, 18 gehalten ist. An seinen Außenkanten ist der Schneidenträger 15 mit Schneiden 16, 20 versehen.

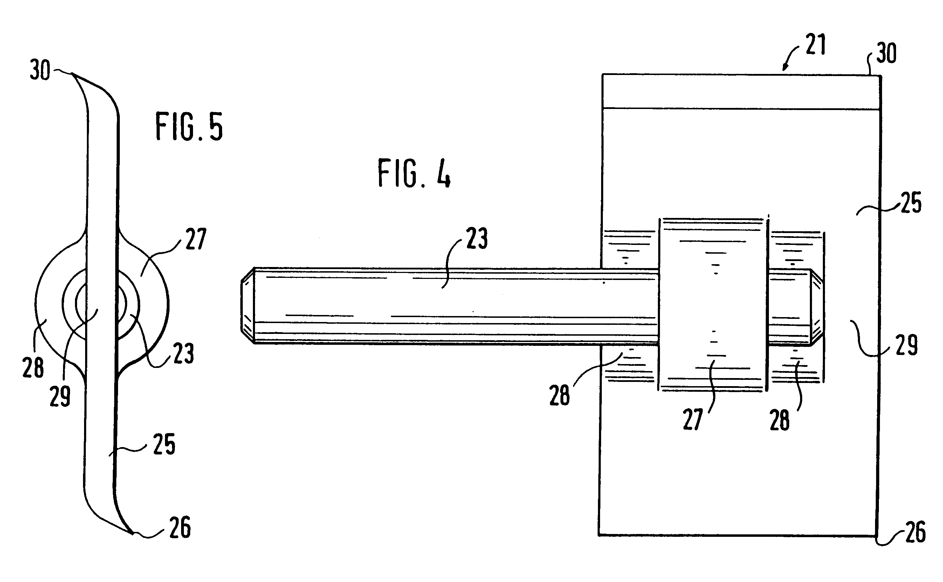

In Figur 4 ist ein Fräswerkzeug 21 mit einem Schaft 23 und einem Schneidenträger 25 gezeigt. Das Fräswerkzeug 21 ist mit gewölbten Bereichen 27, 28 versehen. Einer der gewölbten Bereiche 27, 28 ist so ausgeführt, daß in Verlängerung der Achse des Schaftes 23 ein Stück des Schneidenträgers 25 als nicht verformter, ebener Steg 29 verläuft. Dieser Steg 29 dient als axialer Anschlag für den Schaft 23 und kann als zusätzliche Verbindungsfläche zum Schaft 23 dienen. An den Außenkanten des Schneidenträgers 25 sind Schneiden 26, 30 angeordnet. Zwischen dem Steg 29 und dem Schaft 23 kann eine nicht mit dargestellte Schweißverbindung bestehen.

Die Figur 5 zeigt die Seitenansicht des Ausführungsbeispieles der Figur 4. Dabei ist der Verlauf des Steges 29 besonders gut erkennbar.

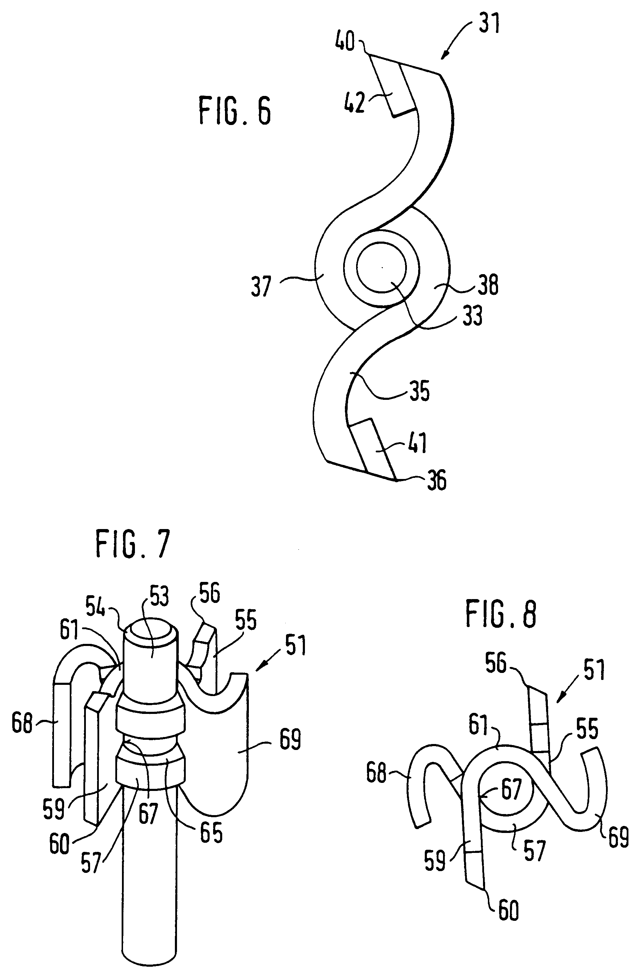

In Figur 6 ist in einer Seitenansicht ein Ausführungsbeispiel eines Fräswerkzeuges 31 in Blechausführung dargestellt. Ein Schaft 33 ist auf einem Schneidenträger 35 zwischen gewölbten Bereichen 37, 38 geführt. Schneiden 36, 40 sind auf Schneidplatten 41, 42 angeordnet.

Diese sind auf dem Schneidenträger 35 auf der sich bei Betrieb des Werkzeuges auf das Werkstück zubewegenden Seite durch Löten, Kleben oder Schweißen befestigt.

Alle Ausführungsbeispiele entsprechend den Figuren 1 - 6 konnen aus Sintermetall oder aus Blech bzw. Stahl bestehen. Unterschiede ergeben sich dabei in den werkstoffbedingt möglichen Verbindungen zwischen dem Schaft 3, 13, 23, 33 und dem Schneidenträger 5, 15, 25, 35. Während Quetschverbindungen für die Stahlausführung zweckmäßig und günstig herstellbar sind, sind für die Sintermetallausführung Klebe-, Löt- oder Schweißverbindungen günstiger.

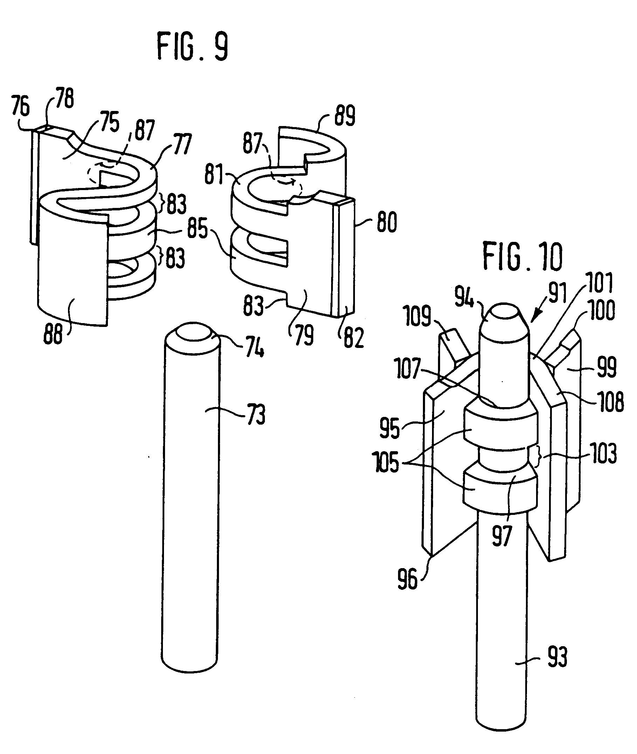

Ein in Figur 7 gezeigtes Fräswerkzeug 51 besteht aus einem zylindrischen Schaft 53 mit einer Fase 54, der einen ersten und zweiten Schneidenträger 55, 59 mit einer ersten und zweiten Schneide 56, 60 trägt. Der Schneidenträger 55 ist mit einem gewölbten Bereich 57 mit - in Figur 9 gezeigten - Ausnehmungen 83 und zwischen diesen verbleibenden Stegen 85 versehen. Ebenso ist der zweite Schneidenträger 59 mit einem - in Figur 9 gezeigten - gewölbten Bereich 81 mit Aus- nehmungen 83 sowie mit Stegen 85 versehen. Die Stege 85 des ersten Schneidenträgers 55 ragen in die Ausnehmungen 83 des zweiten Schneidenträgers 59 und umgekehrt ragen die Stege 85 des zweiten Schneidenträgers 59 in die Ausnehmung 83 des ersten Schneidenträgers 55. Die gegensinnig gekrümmten, einander übergreifenden Stege 65 bilden eine rohrförmige Fassung 67 zur Aufnahme des Schaftes 53.

Die Schneiden 56, 60 sind - bezogen auf die Achse des Schaftes 53 - an radial endseitigen äußeren Kanten der Schneidenträger 55, 59 angeordnet. Die den Schneiden 56, 60 gegenüberliegenden Endseiten der Schneidenträger 55, 59 sind zu Sicherheitsflügeln 68, 69 umgebogen. Diese haben einen deutlich kleineren Abstand zur Achse des Schaftes 53 als die Schneiden 56, 60. Die Sicherheitsflugel 68, 69 fungieren zum einen als handgerechter Griff zum Einsetzen des Fräsers 51 in eine Werkzeugaufnahme, zum anderen als Gegengewicht für die Seite der Schneiden 56, 60. Dadurch wird das Schwingungsverhalten des Fräswerkzeuges 51 während dessen üblicherweise sehr hochtourigen Rotation beim Fräsen verbessert. Eine durch die Abnutzung der Schneiden 56, 60 bedingte eventuelle Unwucht wird minimiert.

Zusatzliche, nicht mit dargestellte frontale Schneiden können beispielsweise auf den Stirnseiten der Schneidenträger 55, 59 angeordnet sein.

Der in Figur 8 gezeigte Querschnitt des Fräswerkzeuges 51 zeigt dessen S-förmiges Profil. Die Sicherheitsflügel 68, 69 sind spitzwinklig umgebogen und gehen tangential in die gewölbten Bereiche 57, 61 über. Diese gehen auf der von den Sicherheitsflügeln 68, 69 abgewandten Seite tangential in die geraden Schneidenträger 55, 59 über.

Die in einem weiteren Ausführungsbeispiel in Figur 9 gezeigten Schneidenträger 75, 79 mit den Schneiden 76, 80 sind einander gegenüber so angeordnet, daß - durch Gegeneinanderbewegen - deren Stege 85 in die Ausnehmungen 83 gelangen. Die derart einander übergreifenden Stege 85 bilden gemeinsam die - gestrichelt dargestellte - Fassung 87, in die der Schaft 73 gesteckt wird. Die Fase 74 am einen Ende des Schaftes 73 erleichtert dessen Einführen in die Fassung 87.

Es ist zweckmäßig, eine Verdrehsicherung der Schneidenträger 75, 79 gegeneinander sowie gegenüber dem Schaft 73 durch Quetsch-, Klemm-, Schweiß-, Löt- oder Klebeverbindung herzustellen. Durch Verwendung eines sich in Einschieberichtung verjüngenden, geringfügig konischen Schaftes 73 kann dessen besonders guter, selbsthemmender Preßsitz in der durch die gewölbten Bereiche 77, 81 gebildeten, rohrartigen Fassung 87 erreicht werden. Die Sicherheitsflügel 88, 89 sind wie im vorherigen Ausfuhrungsbeispiel ausgestaltet.

Ein besonderer Vorteil des Ausführungsbeispiels nach Figur 9 ist es, daß auf die Schneidenträger 75, 79 aus geringerwertigem Werkstoff Schneidplatten 78, 82 aus höherwertigen Werkstoffen geschweißt, geklebt oder gelötet sind.

Das Ausführungsbeispiel der Figur 10 zeigt ein Fräswerkzeug 91, das mit geraden Sicherheitsflügeln 108, 109 versehen ist. Die übrigen Teile, wie Schaft 93 mit Fase 94, erster Schneidenträger 95 mit Schneide 96 und gewölbtem Bereich 97, zweiter Schneidenträger 99 mit zweiter Schneide 100 und gewölbtem Bereich 101 und mit Ausnehmungen 103 sowie Stegen 105 bilden über eine rohrartige Fassung 107 das Werkzeug 91 auf gleiche Weise wie in den Figuren 7 bis 9 gezeigt.

Falls eine Quetschverbindung zwischen dem Schaft 3, 23, 33, 53, 73, 93 und den Schneidenträgern 5, 9, 25, 29, 55, 59, 75, 79, 95, 99 hergestellt ist, sollte diese so ausgeführt sein, daß der Schaft im Bereich der Ausnehmungen 13, 33, 63, 83, 103 kleine radiale Vorsprunge erhält. Diese tragen zur Verdrehsicherung der Verbindung bei.

Eine Ausführung der Schneidenträger 5, 9, 25, 29, 55, 59, 75, 95, 99 aus Sintermetall kann für besonders hohe Qualitätsanforderungen wirtschaftlich günstig sein.

Für bestimmte Fälle ist es von Vorteil, wenn das dem Werkstück zugewandte freie Ende des Schaftes als Bohrer ausgebildet ist. Dieser dient dann als Zentrumsbohrer für ein axial schneidendes, nicht mit dargestelltes Ausführungsbeispiel eines Fräswerkzeugs.

## Patentansprüche

1. Fräswerkzeug (1, 11, 21, 31, 51, 71, 91) mit einem Schaft (3, 23, 33, 53, 73, 93) an dem flügelartig radial abstehend ein flacher, zur Drehung um eine in seiner Ebene liegende Achse vorgesehener erster Schneidenträger (5, 15, 25, 35, 55, 75, 95) mit mindestens einer Schneide (6, 10, 16, 20, 26, 30, 36, 40, 56, 60, 76, 96, 100) befestigt ist, wobei das Fräswerkzeug (1, 11, 21, 31, 51, 71, 91) aus mindestens zwei Teilen, dem Schaft (3 ,13, 23, 33, 53, 73, 93) und dem ersten Schneidenträger (5, 15, 25, 35, 55, 75, 95) gefügt ist, dadurch gekennzeichnet, daß der Schneidenträger (5, 15, 25, 35, 55, 75, 95), den Schaft (3, 13, 23, 33, 53, 73, 93) mit mindestens zwei gewölbten, einander diametral bezüglich der Schaftachse gegenüberliegenden und axial versetzten Bereichen (7, 8, 17, 18, 27, 28, 37, 38) umschlingt und festhält.

2. Fräswerkzeug nach Anspruch 1, dadurch gekennzeichnet, daß das Fräswerkzeug (1, 11, 21, 31, 51, 71, 91) neben dem ersten Schneidenträger (5, 25, 35, 55, 75, 95) einen zweiten Schneidenträger (59, 79, 99) aufweist und die Schneidenträger den Schaft (53, 73, 93) gemeinsam umschlingen und sich dabei aneinander abstützen.

3. Fräswerkzeug nach Anspruch 1, dadurch gekennzeichnet, daß die Schneidenträger (5, 15, 25, 35) den Schaft (3, 13, 23, 33) mit mindestens zwei gewölbten, insbesondere als Rohrsegment ausgebildeten Bereichen (7, 8, 17, 18, 27, 28, 37, 38) umschlingen.

4. Fräswerkzeug nach Anspruch 3, dadurch gekennzeichnet, daß mindestens zwei zueinander gegensinnig gewölbte Bereiche (7, 8, 17, 18, 27, 28, 37, 38) parallel zur Achse des Schaftes (3, 13, 23, 33) versetzt sind.

5. Fräswerkzeug nach Anspruch 4, dadurch gekennzeichnet, daß die gewölbten Bereiche (7, 8, 17, 18, 27, 28, 37, 38) durch zur Achse des Schaftes (3, 13, 23, 33) normale Flächen begrenzt sind.

6. Fräswerkzeug nach den Anspruchen 2 und 5, dadurch gekennzeichnet, daß der Schaft (3, 13, 23, 33, 53, 73, 93) mit einer Quetschverbindung an mindestens einem der beiden Schneidenträger (5, 15, 25, 35, 55, 59, 75, 79, 95, 99) befestigt ist.

7. Fräswerkzeug nach Anspruch 6, dadurch gekennzeichnet, daß der Schaft (3, 13, 23, 33, 53, 73, 93) im Bereich der Quetschverbindung radiale Vorsprünge trägt.

8. Fräswerkzeug nach Anspruch 7, dadurch gekennzeichnet, daß der Schaft (3, 13, 23, 33, 53, 73, 93) mittels Schweiß-, Lötoder Klebeverbindung an mindestens einem der beiden Schneidenträger (5, 15, 25, 35, 55, 59, 75, 79, 95, 99) befestigt ist.

9. Fräswerkzeug nach Anspruch 8, dadurch gekennzeichnet, daß der erste und zweite Schneidenträger (5, 15, 25, 35, 55, 59, 75, 79, 95, 99) aus Blech oder aus Sintermetall bestehen.

10. Fräswerkzeug nach Anspruch 9, dadurch gekennzeichnet, daß der erste und zweite Schneidenträger (5, 15, 25, 35, 55, 59, 75, 79, 94, 99) gesonderte Schneidplatten (41, 42, 78, 82) tragen.

11. Fräswerkzeug nach Anspruch 1 bis 9, dadurch gekennzeichnet, daß der Schaft (3, 13, 23, 33, 53, 73, 93) als Bohrer ausgebildet ist.

12. Fräswerkzeug nach den Anspruchen 2 und 6, dadurch gekennzeichnet, daß sich der erste und zweite Schneidenträger (55, 59, 75, 79, 95, 99) gegenseitig übergreifen und miteinander eine rohrartige Fassung (67, 87, 107) fur den Schaft (53, 73, 93) bilden und daß dabei sowohl die Schneidenträger (55, 59, 75, 79, 95, 99) gegeneinander verspannt und verriegelt sind als auch der Schaft (53, 73, 93) umgriffen und festgehalten ist.

13. Fräswerkzeug nach Anspruch 12, dadurch gekennzeichnet, daß die Schneidenträger (55, 59, 75, 79, 95, 99) mit reißverschlußartig ineinander passenden, sich wechselseitig durchdringenden Ausnehmungen (53, 73, 93) und Stegen (55, 75, 95) versehen sind, wobei die Stege (65, 85, 105) in Form entgegengesetzt zueinander gewölbter einander übergreifender Bereiche (57, 61, 77, 81, 97, 101) die rohrartige Fassung (57, 77, 97) für den Schaft (53, 73. 93) bilden.

14. Fräswerkzeug nach Anspruch 13, dadurch gekennzeichnet, daß die Ausnehmungen (63, 83, 103) im wesentlichen die Negativform der geringfügig breiteren Stege (65, 85, 105) besitzen.

15. Fräswerkzeug nach Anspruch 14, dadurch gekennzeichnet, daß der Schaft (53, 73, 93) als selbsthemmender Konus in Preßpassung oder als zylindrischer Stift über eine Quetschverbindung an den Schneidenträgern (55, 59, 75, 79, 95, 99) in der Fassung (67, 87, 107) gehalten ist.

16. Fräswerkzeug nach Anspruch 15 dadurch gekennzeichnet, daß die Schneidenträger (55, 59, 75, 79, 95, 99) auf ihren den Schneiden (56, 60, 76, 80, 96, 100) gegenüberliegenden Seiten je einen SicherheitSflügel (68, 69, 88, 89, 108, 109) ohne Schneiden bilden.

17. Fräswerkzeug nach Anspruch 16, dadurch gekennzeichnet, daß die Sicherheitsflügel (68, 69, 88, 89, 108, 109) an ihren Enden abgerundet, vorzugsweise umgebogen sind.

## Claims

1. Milling tool (1, 11, 21, 31, 51, 71, 91) having a shank (3, 23, 33, 53, 73, 93) to which a flat first cutting-edge carrier (5, 15, 25, 35, 55, 75, 95) having at least one cutting edge (6, 10, 16, 20, 26, 30, 36, 40, 56, 60, 76, 96 100) is fastened in a radially projecting, lobe-like manner, which cutting-edge carrier (5, 15, 25, 35, 55, 75, 95) is intended to rotate about an axis lying in its plane, the milling tool (1, 11, 21, 31, 51, 71, 91) being joined together from at least two parts, the shank (3, 13, 23, 33, 53, 73, 93) and the first cutting-edge carrier (5, 15, 25, 35, 55, 75, 95), characterised in that the cutting-edge carrier (5, 15, 25, 35, 55, 75, 95) embraces and holds the shank (3, 13, 23, 33, 53, 73, 93) in place by at least two arched regions (7, 8, 17, 18, 27, 28, 37, 38), lying diametrically opposite each other with respect to the shank axis and axially offset.

2. Milling tool according to Claim 1, characterised in that the milling tool (1, 11, 21, 31, 51, 71, 91), apart from the first cutting-edge carrier (5, 25, 35, 55, 75, 95), has a second cutting-edge carrier (59, 79, 99) and the cutting-edge carriers together embrace the shank (53, 73, 93) and as a result are supported against one another.

3. Milling tool according to Claim 1, characterised in that the cutting-edge carriers (5, 15, 25, 35) embrace the shank (3, 13, 23, 33) with at least two arched areas (7, 8, 17, 18, 27, 28, 37, 38) designed in particular as a tube segment.

4. Milling tool according to Claim 3, characterised in that at least two areas (7, 8, 17, 18, 27, 28, 37, 38) arched in opposite directions to one another are offset parallel to the axis of the shank (3, 13, 23, 33).

5. Milling tool according to Claim 4, characterised in that the arched areas (7, 8, 17, 18, 27, 28, 37, 38) are limited by surfaces normal to the axis of the shank (3, 13, 23, 33).

6. Milling tool according to Claims 2 and 5, characterised in that the shank (3, 13, 23, 33, 53, 73, 93) is fastened to at least one of the two cutting-edge carriers (5, 15, 25, 35, 55, 59, 75, 79, 95, 99) by a crimped joint.

7. Milling tool according to Claim 6, characterised in that the shank (3, 13, 23, 33, 53, 73, 93) has radial projections in the area of the crimped joint.

8. Milling tool according to Claim 7, characterised in that the shank (3, 13, 23,33, 53, 73, 93) is fastened to at least one of the two cutting-edge carriers (5, 15, 25, 35, 55, 59, 75, 79, 95, 99) by means of a welded, brazed or adhesively bonded joint.

9. Milling tool according to Claim 8, characterised in that the first and second cutting-edge carriers (5. 15, 25, 35, 55, 59, 75, 79, 95, 99) are made of metal plate or sintered metal.

10. Milling tool according to Claim 9, characterised in that the first and second cutting-edge carriers (5, 15, 25, 35, 55, 59, 75, 79, 95, 99) carry separate cutting tips (41, 42, 78, 82).

11. Milling tool according to Claims 1 to 9, characterised in that the shank (3, 13, 23, 33, 53, 73, 93) is designed as a drill.

12. Milling tool according to Claims 2 and 6, characterised in that the first and second cutting-edge carriers (55, 59, 75, 79, 95, 99) mutually overlap and together form a tubular socket (67, 87, 107) for the shank (53, 73, 93), and in that as a result not only are the cutting-edge carriers (55, 59, 75, 79, 95, 99) restrained and locked against one another but the shank (53, 73, 93) is also enclosed and held in place.

13. Milling tool according to Claim 12, characterised in that the cutting-edge carriers (55, 59, 75, 79, 95, 99) are provided with recesses (63, 83, 103) and webs (65, 85, 105) which fit into one another like a zip fastener and pass through one another alternately, in which arrangement the webs (65, 85, 105) in the form of areas (57, 61, 77, 81, 97, 101) arched in opposite directions to one another and overlapping one another, form the tubular socket (57, 77, 97) for the shank (53, 73, 93).

14. Milling tool according to Claim 13, characterised in that the recesses (63, 83, 103) essentially have the reversed shape of the slightly wider webs (65, 85, 105).

15. Milling tool according to Claim 14, characterised in that the shank (53, 73, 93) is held on the cutting-edge carriers (55, 59, 75, 79, 95, 99) in the socket (67, 87, 107) as a self-locking cone in an interference fit or as a cylindrical pin via a crimped joint.

16. Milling tool according to Claim 15, characterised in that the cutting-edge carriers (55, 59, 75, 79, 95, 99) each have a safety lobe (68, 69, 88, 89, 108, 109) without cutting edges on their sides located opposite the cutting edges (56, 60, 76, 80, 96, 100).

17. Milling tool according to Claim 16, characterised in that the safety lobes (68, 69, 88, 89, 108, 109) are rounded off, preferably bent over, at their ends.

## Revendications

1. Outil de fraisage (1, 11, 21, 31, 51, 71, 91) avec un arbre (3, 23, 33, 53, 73, 93) sur lequel est fixé un premier support de couteau plat (5, 15, 25, 35, 55, 75, 95), prévu pour pouvoir tourner autour d'un axe situé dans son plan, avec au moins un couteau (6, 10, 16, 20, 26, 30, 36, 40, 56, 60, 76, 96, 100), l'outil de fraisage (1, 11, 21, 31, 51, 71, 91) étant équipé d'au moins deux parties de l'arbre (3, 13, 23, 33, 53, 73, 93) et du premier support de couteau (5, 15, 25, 35, 55, 75, 95), caractérisé en ce que le le support de couteau (5, 15, 25, 35, 55, 75, 95) entoure et maintient l'arbre (3, 13, 23, 33, 53, 73, 93) avec au moins deux zones incurvées se faisant face diamétralement par rapport à l'axe de l'arbre et axialement décalés (7, 8, 17, 18, 27, 28, 37, 38).

2. Outil de fraisage selon la revendication 1, caractérisé en ce que l'outil de fraisage (1, 11, 21, 31, 51, 71, 91), outre le premier support de couteau (5, 25, 35, 55, 75, 95) présente un deuxième support de couteau (59, 79, 99) et les supports de couteau entourent globalement l'arbre (53, 73, 93) et s'y appuient l'un sur l'autre.

3. Outil de fraisage selon la revendication 1, caractérisé en ce que les supports de couteau (5, 15, 25, 35) entourent l'arbre (3, 13, 23, 33) avec au moins deux zones incurvées constituées notamment en élément tubulaire (7, 8, 17, 18, 27, 28, 37, 38).

4. Outil de fraisage selon la revendication 3, caractérisé en ce que les zones incurvées en sens contraire (7, 8, 17, 18, 27, 28, 37, 38) sont décalées parallèlement à l'axe de l'arbre (3, 13, 23, 33).

5. Outil de fraisage selon la revendication 4, caractérisé en ce que les zones incurvées (7, 8, 17, 18, 27, 28, 37, 38) sont délimitées par des surfaces normales à l'axe de l'arbre (3, 13, 23, 33).

6. Outil de fraisage selon les revendications 2 et 5, caractérisé en ce que l'arbre (3, 13, 23, 33, 53, 73, 93) est fixé par sertissage à au moins l'un des deux supports de couteau (5, 15, 25, 35, 55, 59, 75, 79, 95, 99).

7. Outil de fraisage selon la revendication 6, caractérisé en ce que l'arbre (3, 13, 23, 33, 53, 73, 93) porte des saillies radiales dans la zone du sertissage 3.

8. Outil de fraisage selon la revendication 7, caractérisé en ce qu'on fixe l'arbre (3, 13, 23, 33, 53, 73, 93) au moyen d'une fixation par soudure, brasage ou collage sur au moins l'un des deux supports de couteau (5, 15, 25, 35, 55, 59, 75, 79, 95, 99).

9. Outil de fraisage selon la revendication 8, caractérisé en ce que le premier et le deuxième support de couteau (5, 15, 25, 35, 55, 59, 75, 79, 95, 99) sont en tôle ou en matériau fritté.

10. Outil de fraisage selon la revendication 9, caractérisé en ce que le premier et le deuxième support de couteau (5, 15, 25, 35, 55, 59, 75, 79, 94, 99) portent des lames de couteau individuelles (41, 42, 78, 82).

11. Outil de fraisage selon l'une des revendications 1 à 9, caractérisé en e que l'arbre (3, 13, 23, 33, 53, 73, 93) est en forme de foret.

12. Outil de fraisage selon les revendications 2 et 6, caractérisé en e que le premier et le deuxième support de couteau (55, 59, 75, 79, 95, 99) se recouvrent simultanément et forment ensemble une monture tubulaire (67, 87, 107) pour l'arbre (53, 73, 93) et qu'ainsi aussi bien les supports de couteau (55, 59, 75, 79, 95, 99) sont en tension l'un vis-à-vis de l'autre et sont verrouillés tout en entourant et maintenant l'arbre (53, 73, 93).

13. Outil de fraisage selon la revendication 12, caractérisé en ce que les supports de couteau 55, 59, 75, 79, 95, 99) sont munis d'entretoises (55, 75, 95) et d'évidements (53, 73, 93) s'interpénétrant et s'adaptant l'un à l'autre par blocage, les entretoises (65, 85, 105) formant des zones (57, 61, 77, 81, 97, 101) incurvées, opposées, s'interpénétrant qui forment une monture tubulaire (57, 77, 97) pour l'arbre (53, 73, 93).

14. Outil de fraisage selon la revendication 13, caractérisé en ce que les évidements (63, 83, 103) possèdent en négatif la forme des entretoises légèrement plus larges (65, 85, 105).

15. Outil de fraisage selon la revendication 14, caractérisé en ce que l'arbre (53, 73, 93) est maintenu sous forme de cône autobloquant dans l'ajustage serré ou en tant que tige cylindrique par un sertissage sur le supports de couteau (55, 59, 75, 79, 95, 99) dans la monture (67, 87, 107).

16. Outil de fraisage selon la revendication 15, caractérisé en ce que les supports de couteau (55, 59, 75, 79, 95, 99) forment chacun avec leurs côtés opposés aux couteaux (56, 60, 76, 80, 96, 100) une aile de sécurité (68, 69, 88, 89, 108), 109) sans couteau.

17. Outil de fraisage selon la revendication 16, caractérisé en ce que les ailes de sécurités (68, 69, 88, 89, 108, 109) sont arrondies à leurs extrémités, de préférence incurvées.
